Europäisches Patentamt

European Patent Office

Office européen des brevets

(19)

(11) Numéro de publication : **0 338 915 B1**

(12) **FASCICULE DE BREVET EUROPEEN**

(45) Date de publication du fascicule du brevet :
**02.12.92 Bulletin 92/49**

(51) Int. Cl.⁵ : **H04N 11/08**

(21) Numéro de dépôt : **89401068.5**

(22) Date de dépôt : **18.04.89**

(54) **Procédé de diffusion de programmes de télévision dérivé du type MAC/Paquets, et installation de mise en oeuvre du procédé.**

(30) Priorité : **19.04.88 FR 8805149**

(43) Date de publication de la demande :
**25.10.89 Bulletin 89/43**

(45) Mention de la délivrance du brevet :
**02.12.92 Bulletin 92/49**

(84) Etats contractants désignés :
**DE GB NL**

(56) Documents cités :
**EP-A- 0 121 967**
**EP-A- 0 190 919**
**DE-A- 2 348 291**
**GB-A- 2 144 298**

(73) Titulaire : **FRANCE TELECOM**
**6, Place d'Alleray**
**F-75015 Paris (FR)**
Titulaire : **TELEDIFFUSION DE FRANCE**
**10, rue d'Oradour sur Glane**
**F-75015 Paris (FR)**

(72) Inventeur : **Pommier, Daniel**
**Le Chant des Alouettes Breal sous Montfort**
**F-35310 Mordelles (FR)**
Inventeur : **Declerck, Christophe**
**26, rue de la Motte**
**F-35630 Hede (FR)**

(74) Mandataire : **Fort, Jacques**
**CABINET PLASSERAUD 84, rue d'Amsterdam**
**F-75009 Paris (FR)**

## Description

L'invention concerne la diffusion de programmes de télévision sous forme d'un signal comportant, pour chaque ligne utile de la trame de télévision, un multiplex temporel en bande de base d'une salve numérique de son et de données et d'un multiplex de signaux analogiques de chrominance et de luminance, c'est-à-dire ayant les caractères essentiels de la norme D-MAC ou D2-MAC/PAQUET.

On trouvera une description de cette dernière norme dans la brochure "Spécification du système D2-MAC-PAQUET", septembre 1985, Ministère des Postes et Télécommunications et de la Télédiffusion, ou à la norme D-MAC/PAQUET, qui se différencie de la précédente en ce que les bits de données sont transmis à 20, 25 Mbits/s plutôt qu'à 10,125 Mbits/s.

Le signal D2-MAC/PAQUET présente l'intérêt d'avoir un encombrement spectral suffisamment faible pour pouvoir être transmis sur des canaux offrant une bande de base pouvant être aussi faible que 5 MHz, avec un écartement de 7 ou 8 MHz. Il peut en conséquence être diffusé aussi bien sur des réseaux terrestres par modulation d'amplitude à bande latérale résiduelle qu'à partir de satellite, par modulation de fréquence. Suivant la norme D2-MAC/PAQUET, la synchronisation est réalisée soit à partir d'un mot de synchronisation de trame de 64 bits inséré dans la ligne 625, soit en utilisant les mots de synchronisation de ligne insérés dans chaque ligne.

Des circuits intégrés de décodage ont déjà été réalisés pour traiter le signal D2-MAC reçu, puis numérisé, et pour assurer notamment les fonctions de synchronisation, démultiplexage des composantes, décodage des sons, décodage de la luminance et de la chrominance et sortie de la ligne 625 qui contient des informations, notamment un compteur de trame pour l'accès conditionnel.

La norme D2-MAC prévoit une possibilité d'accès conditionnel qui implique un embrouillage au niveau de la ligne et une messagerie, transmise par certains des paquets de données. L'un des deux procédés d'embrouillage prévus est dénommé "rotation de composantes à double coupure". Il consiste à couper le signal de luminance et le signal de chrominance chacun en un point choisi parmi plusieurs points à des emplacements déterminés à partir de la synchronisation de ligne, le point choisi étant fixé par la valeur de sortie d'un générateur de séquence pseudo-aléatoire.

L'invention vise notamment à fournir un procédé de diffusion de signaux du type général ci-dessus défini, c'est-à-dire un procédé dérivé de la norme D-MAC ou D2-MAC/PAQUET, permettant de retenir la compatibilité du signal avec les réseaux hertziens ou câblés destinés à acheminer également des signaux de télévision classiques (PAL ou SECAM), la compatibilité avec les téléviseurs du parc actuel, au niveau HF et au niveau modulation, et la compatibilité avec les circuits de décodage déjà développés pour les récepteurs MAC/PAQUET, pour la majorité des fonctions.

Dans ce but, l'invention propose notamment un procédé suivant lequel la partie chrominance du signal, éventuellement embrouillé, est soumise à décimation d'un échantillon sur deux et un signal analogique de synchronisation de ligne et un palier d'alignement, compatibles avec les signaux correspondants en PAL ou en SECAM, sont insérés dans la période ainsi libérée de chaque ligne.

A priori, on pouvait penser qu'il était exclu d'insérer un tel signal de synchronisation analogique, constitué par une impulsion de niveau déterminé et de durée appréciable, en conservant à la fois le débit numérique requis et une qualité satisfaisante du signal d'image. Mais en fait, il est possible de raccourcir la durée du signal de chrominance suffisamment pour laisser la place à un signal de synchronisation analogique de durée suffisante et à un niveau d'alignement en augmentant le taux de compression du signal de chrominance ; malgré cette augmentation du taux de compression on conserve une qualité d'image sensiblement égale à celle obtenue avec le codage SECAM ou PAL actuel. La raison en est que le choix d'un taux de compression égal à 3/1 pour la chrominance, c'est-à-dire d'un taux et d'une bande passante moitié de ceux utilisés pour la luminance, a été basé sur des considérations de bande et de bruit, lorsque les signaux comprimés de luminance et de chrominance sont transmis dans une bande de base de 8,4 MHz. Avec une bande de base de 5 ou 6 MHz seulement, par exemple en modulation d'amplitude du type MA/BLR, sur réseau terrestre, cette raison prend une importance réduite.

On realise donc le codage d'image avec compression de la voie de luminance dans un rapport 3/2 et de la voie de chrominance dans un rapport 6/1. On dispose ainsi de 186 échantillons, correspondant à une durée de 9,18 µs, pour insérer un signal de synchronisation analogique et un palier d'alignement. Dans le cas de standards européens, où la synchronisation de ligne est assurée par un niveau de signal "plus noir que noir", le signal analogique de synchronisation pourra comporter successivement un niveau continu à 200 mV au-dessous du niveau correspondant au noir du signal de luminance, puis un niveau d'alignement, à 300 mV au-dessus du niveau précédent (dit fond de synchronisation). Ces deux signaux pourront avoir des durées respectives de 4,7 et 4,49 µs.

L'invention propose également une installation permettant de mettre en oeuvre le procédé ci-dessus défini comportant, dans le récepteur, en plus d'un circuit intégré classique de décodage, tel que le circuit DMA 2270 de ITT, un circuit d'adaptation qui, notamment, reconstitue les échantillons manquants de la composante de chrominance et fournit ainsi au décodeur un signal conforme à la norme D-MAC ou D2-MAC/PAQUET).

L'invention permet d'utiliser aussi bien le procédé d'embrouillage par rotation de composantes à double coupure prévu dans la spécification du système D2-MAC/PAQUET déjà mentionnée, que les procédés à décalage variable entre le signal analogique de synchronisation et le début du signal d'image proprement dit. Un procédé de ce type est décrit dans le document FR-A-2 330 236 auquel on pourra se reporter. Il est également possible d'utiliser d'autres modes d'embrouillage, par exemple par rotation de composantes à double coupure et retournement.

Le décodage des salves duobinaires peut lui-même être réalisé par décision "douce", notamment par le procédé décrit dans la demande de brevet FR-A-2606575, en utilisant le signal de synchronisation analogique incorporé dans la ligne. Ce signal de synchronisation analogique peut être placé à divers emplacements dans le multiplex correspondant à une ligne, notamment du début du multiplex analogique d'image ou entre le signal de chrominance et le signal de luminance.

L'invention sera mieux comprise à la lecture de la description qui suit de modes particuliers de mise en oeuvre, donnés à titre d'exemples non limitatifs. La description se réfère aux dessins qui l'accompagnent, dans lesquels :

- la Figure 1 est un diagramme représentant la répartition du signal numérique et du multiplex analogique d'image dans une ligne;

- la Figure 2, similaire à la Figure 1, correspond au cas d'un signal analogique de synchronisation placé au début du multiplex analogique, suivant un premier aspect de l'invention ;

- la Figure 3, similaire à la Figure 2, correspond au cas d'un signal de synchronisation analogique au milieu, et non pas au début, du multiplex analogique ;

- les Figures 4 et 5 montrent schématiquement la constitution générale d'un décodeur pour récepteur suivant deux modes d'exécution de l'invention ;

- la Figure 6 est un schéma de principe d'une chaîne d'émission permettant de constituer un signal à synchronisation analogique suivant une variante de réalisation ;

- la Figure 7 montre la forme d'onde d'une fraction de la ligne 624, dans une forme de réalisation permettant de traiter cette ligne comme toutes les autres ;

- la Figure 8 est un schéma montrant la constitution de la ligne 625, en cas de mise en oeuvre de la chaîne d'émission montrée en Figure 6 ;

- la Figure 9 est un schéma de principe d'une chaîne de réception permettant de recevoir aussi bien les programmes diffusés conformes à la norme D2-MAC/PAQUET que des programmes diffusés sur réseau terrestre avec synchronisation analogique, en cas d'adaptation à la norme avant décodage et désembrouillage ;

- les Figures 10 et 11 sont des schémas montrant des détails de la chaîne de réception de la Figure 9.

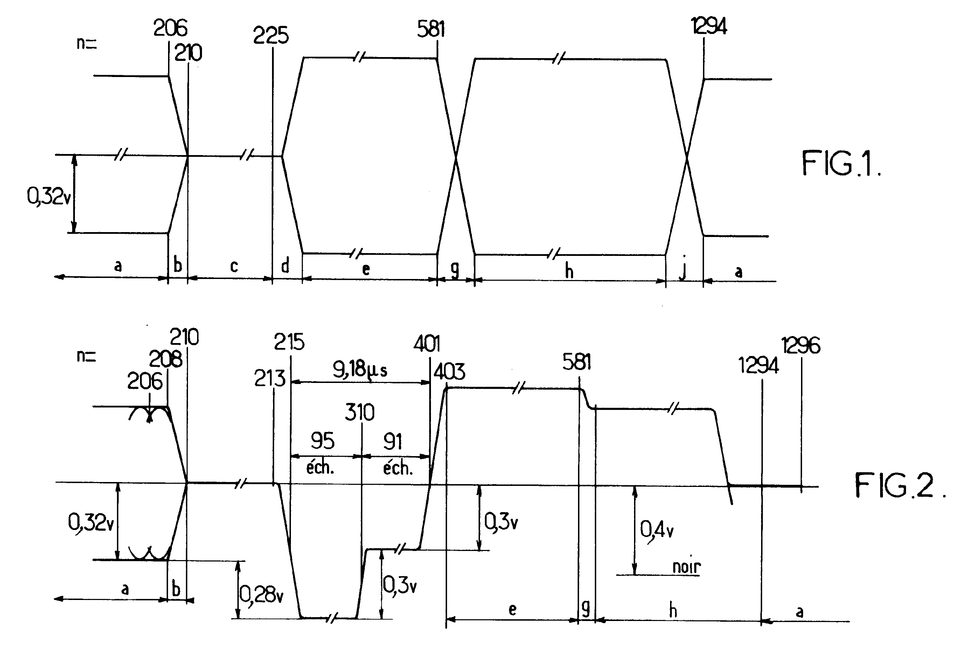

Le diagramme de la Figure 1, où l'échelle des temps n'est pas respectée pour plus de clarté, est une représentation d'une ligne d'un signal D2-MAC. Seules seront décrites ici les modifications apportées au signal dont la constitution de base est décrite dans de nombreux documents, et notamment dans le document "Spécification du système D2-MAC/PAQUET" déjà mentionné auquel on pourra se reporter. Chaque ligne comprend une salve de données numériques de durée $a$, correspondant à 105 bits et contenant un mot de synchronisation de ligne et des données numériques codées en duobinaire. Chaque bit de donnée ou de synchronisation correspond à deux périodes d'horloge à 20,25 MHz. Après une transition $b$ correspondant à quatre périodes d'horloge (c'est-à-dire à la durée de deux bits de données), la période $c$ est destinée à l'alignement et correspond à quinze périodes d'horloge, entre les échantillons d'ordres n = 210 et n = 225. La ligne comprend ensuite une nouvelle transition $d$, une période $e$ de transmission du signal de chrominance (349 échantillons), une période de transition g correspondant à six périodes d'horloge et une période $h$ de transmission du signal de luminance (697 échantillons, correspondant à 696 périodes d'horloge). Une durée j de huit périodes d'horloge est affectée à la transition pondérée entre la fin du signal de luminance et la salve suivante.

Dans le premier mode de mise en oeuvre de l'invention montré en Figure 2, un signal de synchronisation analogique est placé au début du multiplex analogique, après la salve de 10 μs de données codées en duobinaire et le signal d'alignement (niveau de clampage C. La durée de ce signal est réduite dans le mode de réalisation illustré ; cela permet d'ajouter un bit "tampon" toujours à 1 (bit 106) se terminant à l'échantillon 210. Dans le cas d'un décodeur de Viterbi suivant la demande FR-A-261605, la présence de ce bit permet de se dispenser d'une mémoire conservant la partie terminale de chaque salve pendant toute la durée du multiplex video d'une ligne. Le signal de luminance reste inchangé. Mais, du fait du doublement du taux de compression, le nombre d'échantillons de chrominance est réduit de 349 échantillons à 178 échantillons (dont quatre destinés à une transition progressive au début du signal). Les 186 échantillons rendus disponibles, correspondant à une période de 9,18 μs, permettent d'insérer un signal de synchronisation analogique comportant successivement :

- un signal au niveau continu de -600 mV, c'est-à-dire 200 mV au-dessous du niveau de noir, pendant une durée de 95 échantillons,
- un signal d'alignement analogique à -300 mV (c'est-à-dire 300 mV au-dessus du fond de synchronisation) pendant une durée de 91 échantillons.

Les niveaux donnés ci-dessus ne sont pas impératifs et d'autres valeurs pourraient être adaptées, par exemple -400 mV pour le signal d'alignement.

Une telle constitution permet d'effectuer l'embrouillage des signaux d'image par la technique rotation de composantes à double coupure prévue dans la norme D2-MAC, simplement en réduisant à 128, au lieu de 256, le nombre de points de coupure en chrominance possible. Au surplus, le signal de chrominance peut être retourné entre les échantillons 401 et 581, par exemple pour mettre en oeuvre le procédé décrit dans la demande FR 78 05070 (Etablissement Public de Diffusion, dit TELEDIFFUSION DE FRANCE). Deux solutions sont possibles. La première consiste à insérer le signal de synchronisation analogique avant embrouillage éventuel. C'est celle qui sera décrite en premier. L'autre consiste à insérer ce signal après embrouillage. On l'étudiera ensuite.

La constitution montrée en Figure 2 correspond aux lignes transportant un signal analogique d'image. La mise en oeuvre de l'invention implique également une modification des lignes de la période de suppression de trame.

Toutes ces lignes doivent comporter le signal de synchronisation de ligne montré en Figure 1. De plus, quelques-unes des lignes de la période de suppression trame peuvent, si cela est nécessaire du fait des caractéristiques du support de transmission, contenir une impulsion de synchronisation de trame analogique, qui, vis-à-vis du récepteur, est redondant avec le mot de synchronisation de trame prévu par la norme D2-MAC/PAQUET. Cette impulsion de synchronisation de trame sera identique à celle prévue dans le cas de la diffusion par le procédé SECAM ou PAL.

Des modifications supplémentaires sont à prévoir sur les lignes 624 et 625.

Dans la ligne 624, l'insertion de l'impulsion analogique de synchronisation de ligne entre les échantillons 225 et 403 modifie les références de blanc et de noir : le problème peut être écarté en décalant les références de blanc et de noir de 29 échantillons ou encore en réduisant à 6,4 μs la référence de blanc.

La ligne 625 pose un autre problème, du fait qu'elle contient un bloc constitué par une trame de données statique (SDF) et plusieurs blocs appartenant à une trame de données répétée (RDF). L'emplacement du signal de synchronisation analogique est tel qu'il se substitue au bloc SDF et déborde sur le premier bloc de RDF.

Ce problème peut être écarté en ne conservant que les quatre derniers blocs de RDF qui suffisent à la transmission du compteur de trame modulo 128 utilisée pour la synchronisation des récepteurs à accès conditionnel : cette modification n'altère pas le fonctionnement des circuits du genre du DMA 2270, qui n'utilisent pas les données SDF et RDF de la ligne 625.

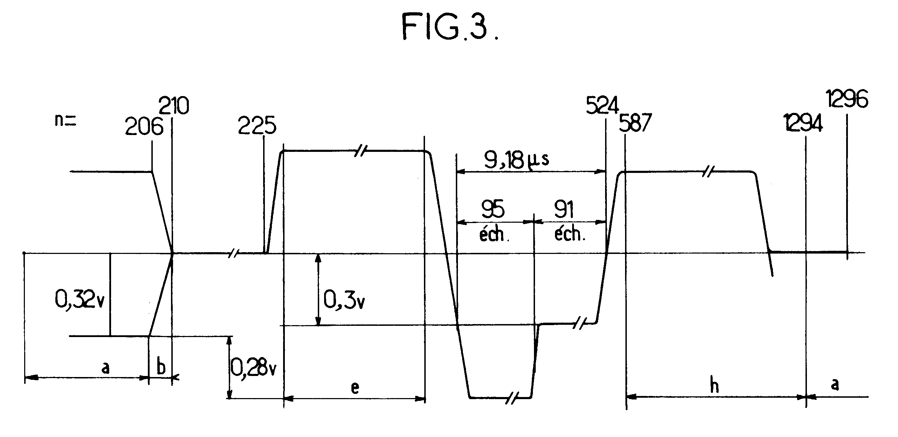

La constitution de signal montrée en Figure 3 ne se différencie de celle de la Figure 2 que parce que le signal de synchronisation analogique est placé à l'intérieur du multiplex analogique, entre les signaux de chrominance et les signaux de luminance. Il n'est pas nécessaire de décrire cette nouvelle constitution, étant donné qu'elle apparaît directement, du fait que les mêmes repères ont été utilisés sur la Figure 3 et la Figure 2.

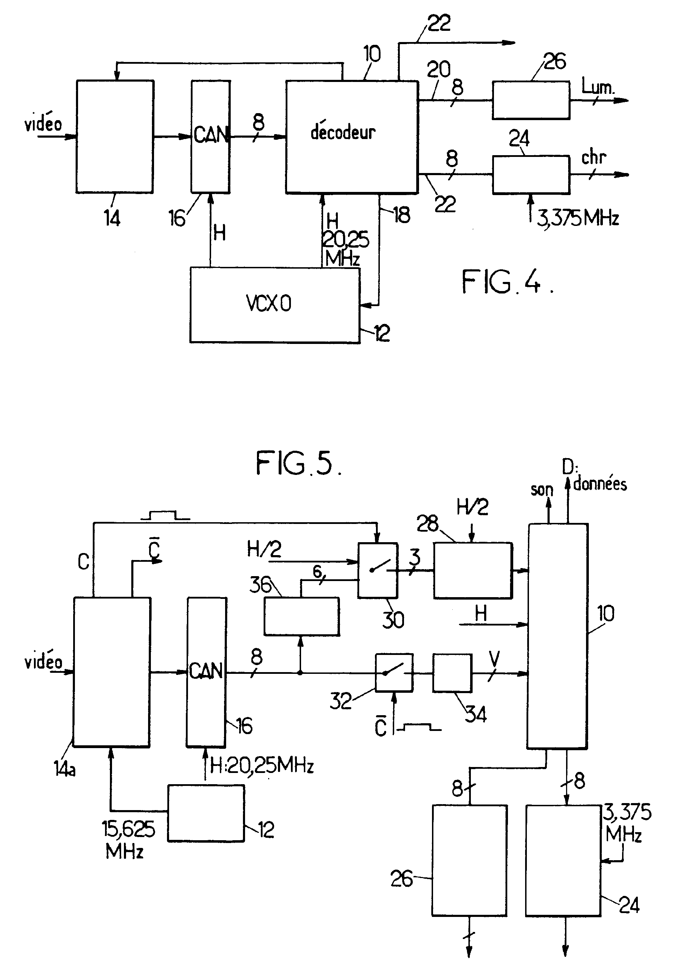

La Figure 4 montre les adjonctions à un circuit existant de décodage D2-MAC/PAQUET permettant de mettre en oeuvre l'invention dans un cas où le signal de synchronisation analogique a été inséré avant embrouillage éventuel. Les fonctionnalités du circuit d'origine sont utilisées pour la synchronisation, le démultiplexage des composantes, le décodage des sons, la sortie en paquets pour la messagerie en cas d'accès conditionnel, la sortie de la ligne 625 pour le compteur de trame modulo 256 et le décodage de la luminance.

On supposera que le décodeur 10 utilisé est du type DMA 2270 de la société ITT, prévu pour fonctionner avec une unité d'horloge 12 de type MCU 2632, comportant un oscillateur commandé à quartz. Le décodeur de type DMA 2270 est prévu pour recevoir et traiter des signaux à la norme D2-MAC/PAQUET préalablement numérisés par un codeur-décodeur, par exemple un codeur-décodeur de type VCU 2133 en cas de réception par câble. Pour simplifier, la figure 4 montre seulement un circuit 14 assurant les fonctions de clampage et de commande automatique de gain à partir de signaux de commande fournis par le décodeur 10 et un convertisseur analogique-numérique 16 recevant des signaux d'horloge H à 20,25 MHz de l'unité d'horloge 12. Le décodeur DMA 2270 comporte une sortie 18 de commande de l'unité d'horloge 12 par boucle de verrouillage de phase, une sortie de signal de luminance 20, sur huit bits, et une sortie 22 de signal de chrominance, également sur huit bits ; il comporte également des sorties 22 de son et de données, de synchronisation et de suppression ligne et trame.

Le décodeur 10 effectue de façon classique le décodage de la luminance. Il décode l'ensemble des échantillons 226 à 581 en les considérant tous comme des échantillons de différence de couleur, U ou V suivant la ligne.

La mise en oeuvre de l'invention implique une expansion dans un rapport 2 des seuls échantillons 404 à 581, les échantillons 226 à 403 étant négligés car ils ne représentent pas la chrominance. Cette expansion est effectuée dans un circuit complémentaire 24 qui reçoit un signal d'horloge à fréquence de 3,375 MHz dérivé du signal d'horloge H fourni par l'unité d'horloge 12. Sur la sortie de luminance est interposé un circuit à retard 26, donnant un retard correspondant au temps de traitement d'expansion ou décompression, de façon à maintenir la concordance de temps entre les signaux de luminance et de chrominance.

Le circuit de décompression 24 peut avoir une constitution très simple puisqu'il ne remplit qu'une seule fonction ; il suffit qu'il relise les échantillons de chrominance dans une fenêtre allant de 404 à 581 avec une horloge à 3,375 MHz ou répète deux fois le même échantillon.

Cependant, si le récepteur est prévu pour recevoir des émissions brouillées par rotation de composantes à double coupure, le circuit de décompression 24 doit en plus pouvoir modifier les points de coupure et incorporer des fonctionnalités qui sont celles déjà décrites dans la norme D2-MAC/PAQUET.

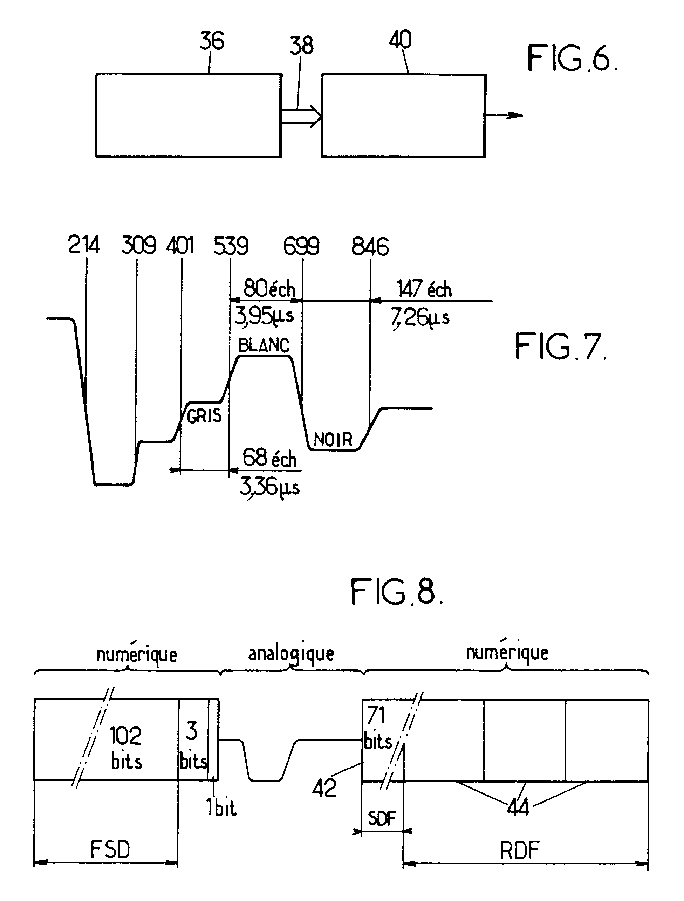

Le mode de réalisation montré en figure 4 conserve un décodage classique "dur" à seuils des salves duo-binaires, prévu dans le décodeur DMA 2270. Celui de la figure 5 (où les organes correspondant à ceux déjà montrés en figure 4 portent le même numéro de référence) est prévu pour permettre un décodage de Viterbi des salves duo-binaires, par exemple à l'aide d'un circuit du genre décrit dans la demande de brevet FR 86 15693. Le décodage de Viterbi peut être assuré par des moyens incorporés au décodeur 10 lui-même. Dans la solution montrée en figure 5, ce décodage est effectué dans un circuit supplémentaire spécialisé 28 pouvant avoir la constitution décrite dans la demande FR 86 15693 et recevant un signal d'horloge à fréquence H/2 de l'unité d'horloge 12.

Le circuit d'entrée 14a utilisé dans le cas de la figure 5 non seulement assure les fonctions du circuit 14 de la figure 4, mais aussi constitue une base de temps fournissant :

- des créneaux de sortie C pendant les durées correspondant à l'émission des salves duo- binaires (bits 1294 à 206) pendant toutes les lignes, sauf la ligne 625 ;
- des créneaux $\overline{C}$ émis pendant la durée du multiplex analogique et pendant la totalité de la durée de la ligne 625.

Les signaux C et $\overline{C}$ commandent des commutateurs d'alternat 30 et 32 destinés respectivement à alimenter le décodeur de Viterbi 28 et, par l'intermédiaire d'un circuit à retard 34 donnant un retard correspondant à celui imposé par le fonctionnement du décodeur de Viterbi, à fournir le signal vidéo au décodeur D2-MAC 10. Dans le mode de réalisation représenté, un circuit de transcodage 36 réduit de huit bits à six bits le codage de chaque échantillon de son ou de données. Etant donné qu'un bit du signal duo-binaire correspond à deux coups d'horloge, le commutateur 30 reçoit également un signal d'horloge à fréquence H/2 de l'unité d'horloge 12.

Des commutateurs supplémentaires peuvent être prévus pour permettre de capter à volonté soit un signal D2-MAC/PAQUET provenant d'un satellite, de constitution strictement conforme à la norme, soit un signal D2-MAC/PAQUET à synchronisation analogique. On peut ainsi réaliser un récepteur compatible aussi bien avec les signaux reçus par satellite qu'avec les signaux transmis ou retransmis sur des supports utilisant des canaux à modulation d'amplitude et notamment à modulation d'amplitude à bande latérale résiduelle.

Dans la variante de réalisation de l'invention qu'on décrira maintenant, la transformation du signal par compression supplémentaire de la chrominance et insertion du signal de synchronisation analogique s'effectue en aval de l'embrouillage dans l'émetteur. La chaîne d'émission a alors la constitution de principe montrée en Figure 6 : entre le codeur D2-MAC/PAQUET à embrouillage 36 et le modulateur sont interposés une interface numérique schématisée en 38 et un adaptateur 40. Cet adaptateur assure les opérations suivantes :

- compression de la partie chrominance par décimation d'un échantillon sur deux et décalage de façon à placer la chrominance entre les échantillons 403 et 581 (figure 2) ;
- insertion du signal de synchronisation et des paliers d'alignement dans chaque ligne et mise en forme des transitions,
- adjonction d'un bit de parité à la salve duo-binaire de façon à faciliter le décodage de Viterbi à la réception, par le procédé décrit dans la demande de brevet FR 86 15693 déjà mentionnée,
- traitement particulier de la ligne 624 de façon que l'opération de décompression appliquée aux lignes MAC restitue un signal de référence conforme à la spécification D2-MAC/PAQUET : ce traitement particulier peut être prévu pour que la partie de la ligne 624 comportant le signal de synchronisation et les références ait l'aspect montré en Figure 7. On peut ainsi traiter la ligne 624 comme toutes les autres lignes,
- traitement particulier de la ligne 625 de façon à transmettre le bloc SDF suivi de trois répétitions du bloc RDF, c'est-à-dire avec la constitution montrée en Figure 8. On trouve successivement une salve de 102 bits constituant le bloc FSD, trois bits de bourrage et un bit de parité. Les trois bits de bourrage n'ont d'autre utilité que d'amener le bit de parité à se trouver au même emplacement que dans les autres lignes. La ligne comporte ensuite la partie analogique (synchronisation et alignement) et une nouvelle partie numérique comprenant le bloc SDF 42 de 71 bits qui remplace les blocs 1 et 2 de la trame de données répétées RDF. Les blocs 44 constituent les blocs 3, 4 et 5 de la trame de données répétées RDF, qui sont conservés.

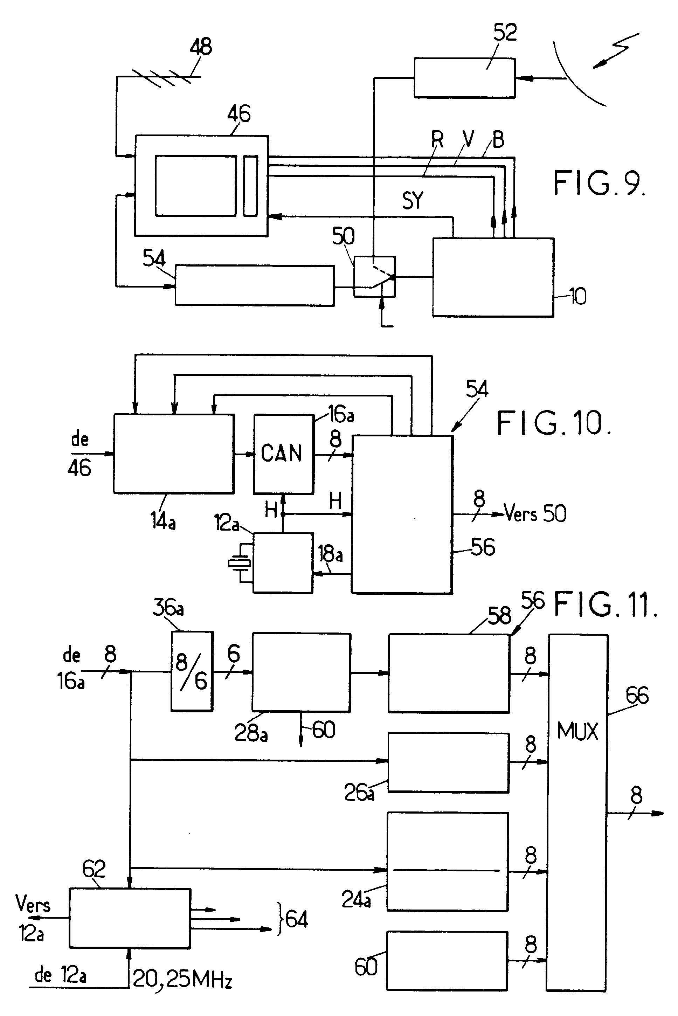

Un récepteur compatible, permettant de recevoir aussi bien les programmes diffusés par satellite suivant la norme D2-MAC/PAQUET que les programmes diffusés sur réseau terrestre avec compression supplémentaire de chrominance et insertion d'un signal de synchronisation analogique, peut avoir la constitution de principe montrée en Figure 9. Le téléviseur 46 est muni d'une antenne de réception 48 de programmes diffusés sur réseau terrestre. Il reçoit les signaux RVB et le signal de synchronisation d'un décodeur 10 qui peut être le même que celui de la Figure 4. Un commutateur 50 à commande manuelle ou automatique permet d'appliquer, sur les entrées du décodeur 10, soit le signal provenant d'un récepteur 52 d'émission sur satellite, soit le signal provenant d'un adaptateur 54 relié à la prise de péritélévision du récepteur 46. L'adaptateur est prévu pour convertir le signal conforme à la Figure 2 ou à la Figure 3, sous forme embrouillée (par exemple par rotation de ligne à double coupure) ou non embrouillée, en un signal à la norme D2-MAC/PAQUET. Cet adaptateur peut avoir la constitution de principe montrée en Figure 10. L'adaptateur comprend successivement un circuit 14a de clampage, de commande automatique de gain et d'extraction de synchronisation et convertisseur analogique/numérique 16a qui reçoit un signal d'horloge d'un circuit 12a. Un circuit intégré 56, qui peut avoir la constitution de principe montrée en Figure 11, envoie, au circuit de clampage 14a, des signaux carrés définissant les fenêtres de référence de blanc et de noir ainsi qu'un signal de commande automatique de gain. Le circuit intégré 56 comporte également une sortie 18a de commande de l'unité d'horloge 12a par boucle de verrouillage de phase.

Le circuit intégré 56 comporte, dans le mode de réalisation montré en Figure 11, un circuit de transcodage 36a qui réduit de huit bits à six bits le codage de chaque échantillon de son ou de données et un décodeur de Viterbi 28a. Ce décodeur fournit un bit de sortie à un codeur duobinaire 58 qui restitue les échantillons codés sous une forme utilisable par le décodeur D2-MAC/PAQUET 10. Le décodeur de Viterbi 28a peut avoir également une sortie 60 fournissant, en cas de violation, un bit de défaut qui est utilisable pour effectuer une adaptation (demande de brevet FR 86 15693) ou même pour commander un réglage automatique d'accord en fréquence, surtout en cas de diffusion MA/BLR sur réseau terrestre.

Le signal provenant du convertisseur analogique/numérique est également appliqué à un circuit 24a de décompression du signal de chrominance, par exemple par interpolation et filtrage. Le circuit 24a peut également être prévu pour effectuer la restitution de la trame de données statiques SDF de la ligne 625. Un circuit à retard 26a donne au signal de luminance un retard correspondant au temps de traitement de décompression dans le circuit 24a et au temps de décodage et de recodage en 28a et 58. Enfin, un circuit 60 est prévu pour restituer le niveau de référence de clampage qui sera utilisé par le décodeur 10. Le circuit intégré 56 comprend encore un comparateur de phase 62 destiné à commander l'unité d'horloge 12a par boucle de verrouillage de phase. Le circuit représenté comporte également des sorties 64 de signaux de synchronisation aux fréquences requises pour le fonctionnement des circuits 28a, 26a, 24a et 58. Un multiplexeur 66 reçoit les sorties des circuits 58, 26a, 24a et 60, toutes codées sur huit bits, et les regroupe sous forme d'une trame D2-MAC/PAQUET embrouillée conforme à la norme.

## Revendications

1.  Procédé de diffusion de programmes de télévision dérivé de la norme D-MAC ou D2-MAC/PAQUET, caractérisé en ce que la partie chrominance du signal, éventuellement embrouillé, est soumise à décimation d'un échantillon sur deux **et en ce qu'**un signal analogique de synchronisation de ligne et un palier d'alignement, compatibles avec les signaux correspondants en PAL ou en SECAM, sont insérés dans la période ainsi libérée de chaque ligne.

2.  Procédé selon la revendication 1, caractérisé en ce que ledit signal de synchronisation de ligne comporte un niveau continu à 200mV au-dessous du niveau correspondant au noir du signal de luminance avant le niveau d'alignement placé à 300mV au-dessus du niveau continu de synchronisation.

3.  Procédé selon la revendication 1 ou 2, caractérisé en ce que le signal analogique de synchronisation est placé au début du multiplex analogique de la norme D-MAC ou D2-MAC/PAQUET.

4.  Procédé selon l'une quelconque des revendications 1 à 3, caractérisé en ce que le signal n'est modifié par rapport à la norme D-MAC ou D2-MAC/PAQUET, qu'après codage d'émission et avant décodage de réception.

5.  Application du procédé selon l'une quelconque des revendications précédentes à la diffusion de programmes de télévision à accès conditionnel, avec rotation de composantes à double coupure.

6.  Installation de mise en oeuvre du procédé selon l'une quelconque des revendications 1 à 4 comportant un émetteur et au moins un récepteur, **caractérisée en ce que** ledit récepteur comporte, en plus d'un circuit intégré de décodage purement D-MAC ou D2-MAC, un circuit commutable d'adaptation reconstituant notamment les échantillons manquants de la composante de chrominance, et fournissant ainsi un signal conforme à la norme D-MAC ou D2-MAC/PAQUET au décodeur.

**Patentansprüche**

1. Verfahren zur Übertragung von Fernsehprogrammen nach der D-MAC oder D2-MAC/Paketnorm, dadurch gekennzeichnet, daß jede zweite Einheit des Chrominanzanteils des eventuell verwürfelten Signals einer Dezimierung unterworfen wird, und daß ein analoges Zeilensynchronisationssignal und eine Abgleichstufe, welche mit den entsprechenden PAL- oder SECAM-Signalen kompatibel sind, in diese derart freigemachte Periode jeder Zeile eingefügt werden.

2. Verfahren nach Anspruch 1, dadurch gekennzeichnet, daß das Zeilensynchronisationssignal ein kontinuierliches Niveau umfaßt, 200 mV unterhalb des beim Helligkeitssignal schwarz entsprechenden Niveaus vor dem auf 300 mV oberhalb des kontinuierlichen Synchronisationsniveaus gesetzten Abgleichniveaus.

3. Verfahren nach Anspruch 1 oder 2, dadurch gekennzeichnet, daß das analoge Synchronisationssignal an den Anfang des analogen Multiplex der D-MAC oder die D2-MAC-Paketnorm gesetzt ist.

4. Verfahren nach einem der Ansprüche 1 bis 3, dadurch gekennzeichnet, daß das Signal in bezug auf die D-MAC oder die D2-MAC/Paketnorm nur nach Emissionskodierung und vor Empfangskodierung verändert wird.

5. Anwendung des Verfahrens nach einem der vorhergegangenen Ansprüche zur Übertragung von Fernsehprogrammen mit bedingtem Zugriff mit Rotation der Komponenten mit doppelter Unterbrechung.

6. Durchführungsanordnung des Verfahrens nach einem der Ansprüche 1 bis 4, umfassend einen Sender und wenigstens einen Empfänger, dadurch gekennzeichnet, daß der Empfänger zusätzlich zu einer reinen D-MAC oder D2-MAC integrierten Dekodierungsschaltung eine umschaltbare Anpassungsschaltung umfaßt, welche insbesondere die fehlenden Einheiten der Chrominanzkomponente wiederherstellt, und auf diese Weise dem Dekoder ein der D-MAC- oder D2-MAC/Paketnorm entsprechendes Signal liefert.

**Claims**

1. Method of broadcasting television programs derived from the D-MAC or D2-MAC/PACKET standard,

characterized in that the colour difference portion of the signal, possibly scrambled, is subjected to subsampling of one sample out of two and in that an analog line synchro-nisation signal and an alignment level, compatible with the corresponding signals according to PAL or SECAM, are inserted in the time period of each line which is consequently rendered available.

2. Method according to claim 1,

characterized in that said line synchronisation signal comprises a DC level at 200 mV under the level corresponding to the black of the luminance signal between the alignment level which is located at 300 mV above the DC synchronisation level.

3. Method according to claim 1 or 2,

characterized in that the analog synchronisation signal is placed at the beginning of the analog multiplex in accordance with the D-MAC or D2-MAC/PACKET standard.

4. Method according to any one of claims 1-3,

characterized in that the signal is modified with respect to the D-MAC or D2-MAC/PACKET signal only after transmission encoding and before reception decoding.

5. Application of the method according to any one of the preceding claims to broadcasting of conditional access television programs, with double cut component rotation.

6. Installation for carrying out the process according of any one of claims 1-4, comprising a transmitter and at least a receiver,

characterized in that said receiver comprises, in addition to a purely D-MAC or D2-MAC decoding integrated circuit, a switchable adaptation circuit particularly for regenerating the omitted samples of the colour difference component and consequently delivering a signal in accordance with the D-MAC or D2-MAC/PACKET standard to the decoder.

FIG.1.

FIG.2.

EP 0 338 915 B1

# FIG.3.

EP 0 338 915 B1

FIG.4.

FIG.5.

FIG.6.

FIG.7.

FIG.8.

FIG.9.

FIG.10.

FIG.11.